# EUROPEAN PATENT APPLICATION

(11) **EP 3 473 109 A1**
(43) Date of publication of application: **24.04.2019**
(21) Application number: 17197123.7
(22) Date of filing: 18.10.2017
(51) Int. Cl.: A23L 3/04

(54) **A MODULE FOR A THERMAL TREATMENT ZONE OF A THERMAL TREATMENT MACHINE, AND A METHOD FOR CARRYING OUT A THERMAL TREATMENT ON A PLURALITY OF ARTICLES**

(71) Applicant: Gebo Packaging Solutions Italy SRL, 43126 Parma (IT)
(72) Inventor: DALL'ORA, Luca, 37139 VERONA (IT)
(74) Representative: Sidel Group

(57) **Abstract**

There is disclosed a module (15a, 15b, .., 15n; 15a', 15b', .., 15n'; 15a", 15b'', .., 15n") for a thermal treatment zone (11, 12, 13) of a thermal treatment machine (1, 1'), comprising: conveying means (10) for advancing along a thermal treatment path (P) a plurality of articles (2) to be treated; and thermal treatment means (14) selectively actuatable for carrying out a thermal treatment on articles (2) advancing, in use, along thermal treatment path (P); the length of said thermal treatment path (P) is selectively adjustable.

## Description

The present invention relates to a module for a thermal treatment zone of a thermal treatment machine, for example a pasteurizer tunnel.

The present invention also relates to a method for carrying out a thermal treatment on a plurality of articles.

As is known, many pourable edible product comprising not only edible products like milk, fruit juice or beverages are sold in articles having different shape and dimension.

These articles are typically made within bottling lines, which comprise a plurality of units for carrying out respective operations on the articles.

Very briefly, the bottling line comprises at least one rinsing unit for rinsing the articles, a filling unit for filling the articles with a pourable edible product, a capping unit for capping the articles and a labelling unit for applying a plurality of labels on the respective articles.

The bottling line also comprises a pasteurizing tunnel generally interposed between the capping unit and the labelling unit.

The pasteurizing tunnel is adapted to heat treating the edible product contained in the filled and capped articles by spraying a liquid, e.g. water, at a controlled temperature on them.

Known pasteurizing tunnels comprise:
- a plurality of conveyors for conveying the articles at a constant speed along a straight path; and
- a plurality of thermal processing zones, through which the conveyors advance the articles.

The thermal processing zones usually comprise: a heating zone in which the product temperature of the edible product inside the articles is gradually raised; a heat-treatment zone in which the edible product temperature is brought to, and kept at, a pasteurising temperature for a desired time interval; and a cooling zone in which the edible product temperature is gradually lowered up to a desired output temperature.

At the end of the temperature processing (i.e. at the output of the pasteuriser), the edible products must have been kept above a predetermined temperature for at least a predetermined time, so as to have accumulated at least a predetermined quantity of pasteurisation units (PUs). In this way, the effective pasteurisation of the processed edible product may be assured.

In particular, each sub-zone comprises:
- a spraying unit positioned above the path of the articles and adapted the liquid at a given temperature on the articles in advancement; and
- at least one collection tank positioned below the same forward movement path to collect the liquid, sprayed by the spraying unit, after it has wet the products.

The spraying unit is adapted to spray the liquid at a given temperature on the articles in advancement.

As the articles advance on the conveyors, the temperature of the edible product follows a temperature profile with respect to the position of the article inside the tunnel. The temperature profile basically comprises an ascending portion in the heating zone, a substantially constant portion in the heat treatment zone, and a descending portion in the cooling zone.

Since the length of each sub-zone is substantially determined by the construction constraints of the pasteurizing tunnel, the temperature profile mainly depends on the speed of the conveyors and on the temperature of sprayed liquid only.

Furthermore, in the known pasteurizing tunnel, it is not possible to vary the time interval in which the articles remain in a given sub-zone without varying the time intervals during which the articles remain in the other sub-zones.

A need is felt to increase the flexibility of the tunnel pasteurizing, especially with regard to the possibility of adjusting the shape of the temperature profile without adjusting the speed of the conveyors and the spraying temperature of the liquid.

Furthermore, the pasteurizing tunnels normally have a throughput smaller than the throughput of the filling unit and the labelling unit, due to the fact that a certain time interval is necessary to heat and cool the edible product inside the articles.

In order to meet the different throughputs, the pasteurizing tunnel normally comprises:
- an inlet dividing station, which receives a single line of articles and feeds the conveyors inside the tunnel with respective lines of articles; and
- an outlet compacting station, which receives the lines of articles and forms a single line of articles to be fed to the labelling unit.

A need is felt to simplify as far as possible the design and the maintenance of the known pasteurizer tunnel, especially with regard to the inlet dividing station and the outlet compacting station.

Finally, a need is felt to reduce the complexity of the pasteurizing tunnel in terms of the installations necessary to recirculate the spraying liquid, and to compact the layout of the pasteurizing tunnel.

EP-A-2058386 discloses an embodiment of a known pasteurizing tunnel.

US-B-7,600,542 discloses a pasteurizing tunnel, which comprises a housing formed in a plurality of exchangeable segments.

It is an object of the present invention to provide a module for a thermal treatment zone of a thermal treatment machine, which meets at least one of the above requirements.

The aforementioned object is achieved by the present invention as it relates to a module for a thermal treatment zone of a thermal treatment machine, as claimed in claim 1.

The invention also relates to a method for carrying out a thermal treatment on a plurality of articles, as claimed in claim 13.

Two preferred embodiments are hereinafter disclosed for a better understanding of the present invention, by way of non-limitative example and with reference to the accompanying drawings, in which:
- Figure 1 is a top view of a first embodiment of a thermal treatment machine comprising a plurality of modules in accordance with the present invention, with parts removed for clarity;
- Figure 2 is a top view in an enlarged scale of some components of the thermal treatment machine of Figure 1;
- Figure 3 is a perspective view of a second embodiment of the thermal treatment machine of Figure 1;
- Figure 4 is a top view of the second embodiment of the thermal treatment machine of Figure 3;
- Figure 5 is a schematic representation of a bottling unit, which comprises the thermal treatment machine of Figures 1 to 4; and
- Figure 6 is a plot of quantities related to a pasteurising process.

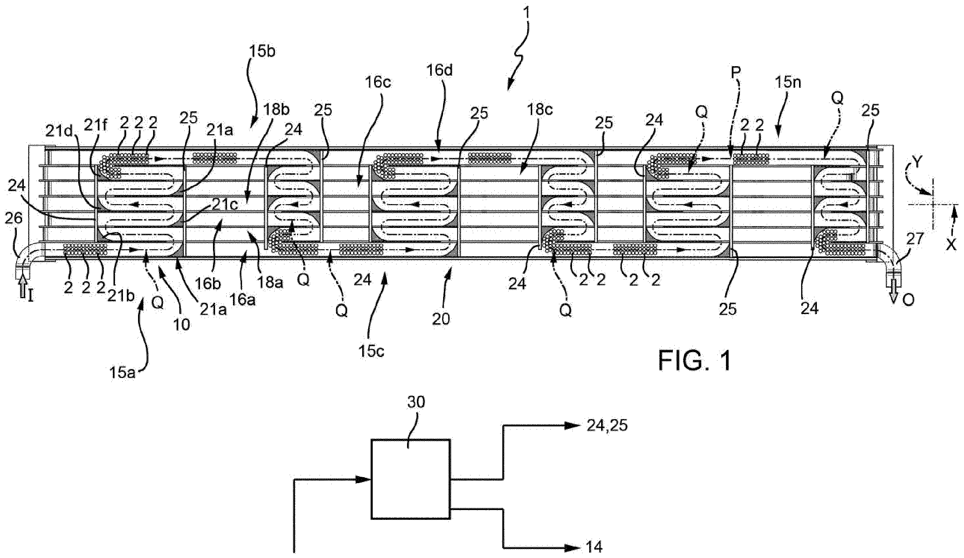

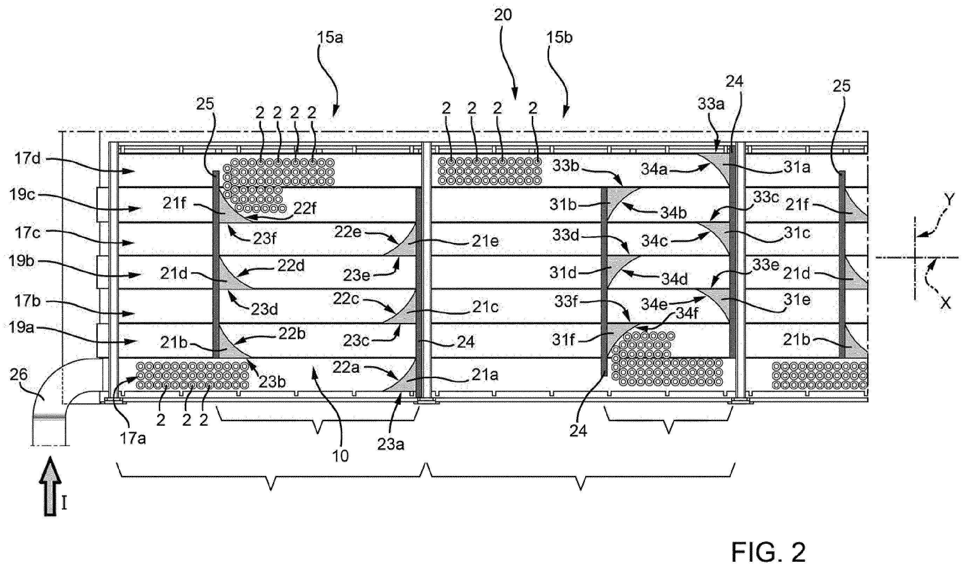

With reference to Figures 1 and 2, numeral 1 indicates as a whole a thermal treatment machine, in particular a tunnel pasteurizing machine for carrying out a thermal treatment, a pasteurization in the embodiment shown, on the edible product contained inside a plurality of articles 2.

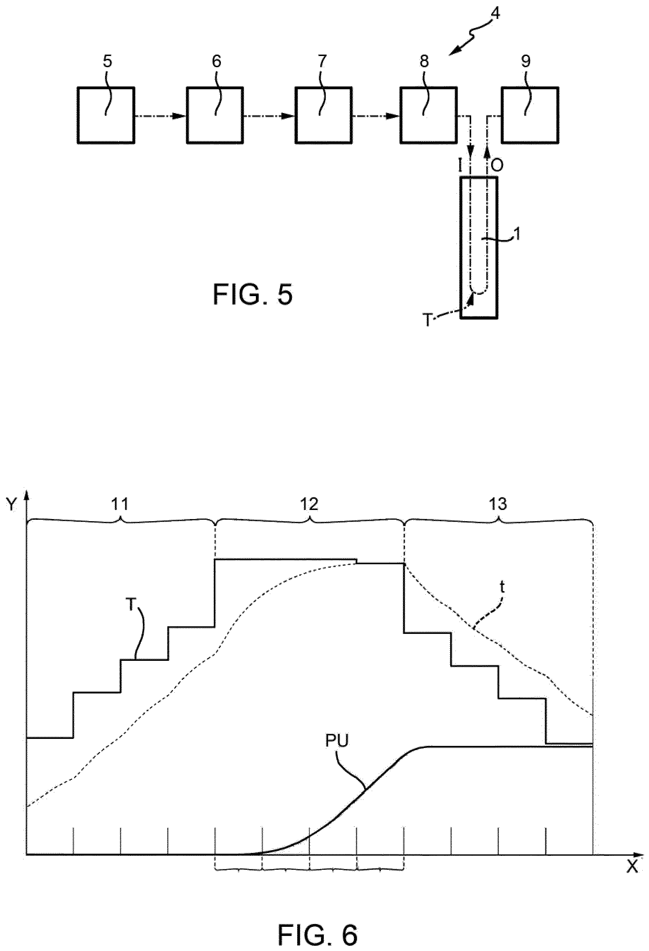

Tunnel pasteurizing machine 1 is adapted to be incorporated in a bottling line 4 (shown only schematically in Figure 5) for producing a plurality of filled, capped and labelled articles 2.

In greater detail, bottling line 4 substantially comprises:
- a blowing unit 5 for blowing articles 2, starting from respective pre-forms;
- a rinsing unit 6 for rising the articles 2;
- a filling unit 7 for filling the articles 2 with the pourable edible product;
- a capping unit 8 for applying a plurality of caps onto respective article 2; and
- a labelling unit 9 for labelling the articles 2 with respective labels.

Preferably, tunnel pasteurizing machine 1 is interposed between capping unit 8 and labelling unit 9, proceeding according the advancing direction of articles 2 inside bottling line 4.

Pasteurizing machine 1 substantially comprises:
- a conveying group 10 for advancing articles 2 from an input station I to an output station 0 along a path P; and
- a plurality of thermal zones 11, 12, 13 (Figure 6), which are adapted to carry out the thermal treatment on the edible product contained in articles 2 travelling along path P.

In the embodiment shown, input and output stations I, 0 are arranged on respective opposite sides of pasteurizing machine 1.

In particular, pasteurizing machine 1 has a main extension parallel to a direction X.

In particular, pasteurizing machine 1 comprises an infeed conveyor 26 for feeding input station I with articles 2 to be treated an out-feed conveyor 27 arranged downstream of output station 0 and for outputting treated articles 2.

Thermal zones 11, 12, 13 comprises a heating zone 11, a heat treatment zone 12 and a cooling zone 13 positioned one after another along path P, in order to carry out the pasteurisation of the edible product contained in articles 2 3.

With reference to Figure 2, each one of the above sub-zones is provided with a respective spraying or injecting element 14 for spraying or injecting a processing fluid (for example water) onto articles 2 advancing along path P in the same sub-zone, and with a respective not-shown collecting element, e.g. a tank, for collecting the processing fluid after it has been sprayed on the articles 2 (i.e. after it has exchanged heat with the same articles 2). In the shown embodiment, spraying element 14 and the collecting element are positioned above and, respectively, below path P defined by conveying group 10, so as to exploit the gravity effect for the movement of the fluid.

Furthermore, pasteurizing machine 1 comprises a fluid system (not shown in the Figures), which is controlled to implement recirculation of the processing fluid, so that the processing fluid fed to spraying elements 14 of the sub-zones of heating zone 11 is taken from the collecting elements of the sub-zones of cooling zone 13, and the processing fluid fed to spraying elements 14 of the sub-zones of cooling zone 13 is taken from the collecting elements the sub-zones of heating zone 11, in order to achieve a energy saving.

Accordingly, the edible product inside articles 2 is at first heated, then pasteurized and finally cooled, as articles 2 advance along path P.

Still more precisely, the temperature of the edible product follows a temperature profile as articles 2 advance along path P.

With reference to Figure 6 a graph is shown, with time on the x-axis and both temperatures and pasteurisation units on the y-axis, relating to a pasteurisation treatment in pasteurizing machine 1 discussed above.

The graph refers to a system operational condition in which articles 2 are fed at a constant speed along path P.

The graph shows: the product theoretical heating thermal trend (dotted curve t); the temperature of the processing liquid injected on the products (continuous curve T); and the accumulation trend of product pasteurisation units (bold continuous curve PU).

Since the speed of conveying group 10 is assumed to be constant, the graph may also be interpreted as a "photograph" of the condition of the edible product at each given moment. In this case, the x-axis shows the position of each article 2 along path P, whilst the y-axis shows the values of the temperature t of the edible product inside article 2, the temperature T of the processing liquid and the quantity of pasteurisation units PU accumulated for the edible product of each article 2 at that specific position.

Accordingly, Figure 6 also shows heating zone 11, heat treatment zone 12 and cooling zone 13. By way of example, each zone 11, 12, 13 is shown as being divided in four subzones, with the direction of the articles 2 along path P being from left to right, as shown by the arrow. It is therefore evident from Figure 6, that the edible product contained in articles 2 accumulate substantially the whole amount of pasteurization units in heat treatment zone 12.

Furthermore, pasteurizing machine 1 comprises a plurality of modules 15a, 15b, .. 15n adjacent and consecutive to one another, proceeding along a straight direction from input station I and output station 0.

Advantageously, the length of path P is selectively adjustable, so as to achieve a desired temperature profile of edible product inside articles 2.

In greater detail, conveying means 10 comprises, for each module 15a, 15b, .. 15n, a plurality of conveyors 16a, 16b, .., 16n (Figure 1) having respective conveying surfaces 17a, 17b, ..., 17n (Figure 2) travelling in direction X along a first oriented direction and a plurality of conveyors 18a, 18b, .. 18n, having respective conveying surfaces 19a, 19b, ..., 19n travelling along direction X and in a second oriented direction opposite to the first oriented direction and immediately consecutive to respective conveying surfaces 17a, 17b, .. 17n, proceeding along path P according to the advancing direction of articles 2.

In the present description, the expression "oriented direction" indicates a direction oriented from a first side to a second side, e.g. from left side to right side or vice-versa.

Each module 15a, 15b, .. 15n further comprises deviating means 20 configured to interact with articles 2 travelling along conveying surface 17a, 17b, .., 17n and for deviating articles 2 from conveying surface 17a, 17b, .., 17n towards immediately consecutive conveying surfaces 19a, 19b, .., 19n.

As will be evident from the foregoing, the length of path P is adjusted by adjusting the position of deviating means 20 with respect to conveying surfaces 17a, 17b, .., 17n; 19a, 19b, .., 19n.

In particular, each module 15a, 15b, .. 15n comprises an inlet and an outlet.

The inlet of module 15a is fed with articles 2 to be treated by inlet station I.

The outlet of each module 15a, 15b, .., feeds the inlet of each module 15b, 15c,.. 15n with articles 2.

The outlet of module 15n feeds outlet 0 of pasteurizing machine 1 with treated articles 2.

Each module 15a, 15b, .., 15 is associated to a relative sub-zone and, therefore, to a relative spraying element 14.

Conveying surfaces 17a, 17b, .. 17n and 19a, 19b, .. 19n have a length parallel to direction X and a width parallel to a direction Y.

Direction Y is orthogonal to direction X and defines a horizontal plane with direction X. Conveying surfaces 17a, 17b, .. 17n and 19a, 19b, .. 19n define a plane parallel to the plane defined by directions X, Y.

In particular, with reference to modules 15a, 15c, .., 15n (Figure 2), conveying surface 19a is immediately consecutive to conveying surface 17a; conveying surfaces 17b is immediately consecutive to conveying surface 19a; conveying surface 19b is immediately consecutive to conveying surface 17b, etc., proceeding according to the advancing trajectory of articles 2 along path P.

Differently, with reference to modules 15b, 15d, .., 15n, conveying surface 19c is immediately consecutive to conveying surface 17d; conveying surface 17c is immediately consecutive to conveying surface 19c; conveying surface 19b is immediately consecutive to surface 17c; conveying surface 17b is immediately consecutive to surface 19b; conveying surface 19a is immediately consecutive to surface 17b; and conveying surface 17a is immediately consecutive to surface 19a, proceeding according to the advancing trajectory of articles 2 along path P.

In the embodiment shown, the first oriented direction is oriented from inlet station I to outlet station 0 and the oriented direction is oriented from outlet station 0 to inlet station I.

In the embodiment shown, the length of conveyors 16a, 16b, .., 16n; 18a, 18n, .., 18n is greater than the length of modules 15a, 15b, .., 15n.

Furthermore, conveying surface 17a and conveying surface 17d define respectively the inlet and the outlet of module 15a, 15c; conveying surface 17d and conveying surface 17a define respectively the inlet and the outlet of modules 15b, 15d, .., etc..

In the embodiment shown, conveyors 16a, 16b, .., 16n and 18a, 18b, .., 18n are common to all the modules 15a, 15b, ..,, 15n.

Deviating means 20 comprise, in turn,:
- a plurality of deviators 21a, 21b, .. 21n arranged respectively on conveying surface 17a, 19a, 17b, 19b, .., 17n, 19n of modules 15a, 15c, 15f, .., etc; and
- a plurality of deviators 31a, 31b, .. 31n arranged respectively on conveying surfaces 17d, 19c, 17c, 19b, 17b, 19a of modules 15b, 15d, 15g, .., etc.

In particular, deviator 21a deviate along direction Y orthogonal to direction X articles 2 from conveying surface 17a to conveying surface 19a.

Similarly, deviator 21b deviate along direction Y articles 2 from conveying surface 19a to conveying surface 17b., etc..

Deviators 21a, 21b, .., 21n are arranged alternately on the side of inlet of relative module 15a, 15c, .., 15n and on the opposite side thereof.

In greater detail, deviators 21a, 21c, 21e, ...,, etc are arranged on the side of the inlet of relative module 15a, 15c, .., 15n.

Deviators 21b, 21d, 21f, etc are arranged on the opposite side of the inlet of relative module 15a, 15c, .., 15n.

Deviator 31a deviate articles 2 along direction Y orthogonal to direction X articles 2 from conveying surface 17d to conveying surface 19c.

Similarly, deviator 31b deviate along direction Y articles 2 from conveying surface 19c to conveying surface 17c.

Deviators 31a, 31b, .., 31n are arranged alternately on the side of inlet of relative module 15b, 15d.., etc and on the opposite side thereof.

In greater detail, deviators 31a, 31c, 31e, ...,, etc are arranged on the side of the inlet of relative module 15b, 15d, .., 15n.

Deviators 31b, 31d, 31f, etc are arranged on the opposite side of the inlet of relative module 15b, 15d, .., 15n.

In the embodiment shown, deviators 21a, 21c, .. 21n (31a, 31c, 31n) comprise respective (Figure 2):
- straight guide surfaces 23a, 23c, .., 23n (33a, 33c, .. 33n) arranged on the side of conveying surfaces 17a, 17c.. 17n (17d, 17c, 17b) opposite to the immediately consecutive conveying surface 19a, 19c, .. 19n (19c, 19b, 19a); and
- curved guide surfaces 22a, 22c, .. 22n (34a, 34c, 34e), which are arranged on the side of respective conveying surfaces 17a, 17c, .. 17n (17d, 17c, 17b) and extend from relative guide surfaces 23a, 23c, .., 23n (33a, 33c, .. 33n) towards respective immediately consecutive conveying surface 19a, 19c, .. 19n (19c, 19b, 19a).

In a completely analogous way, deviators 21b, 21d, .., (31b, 31d, ..) comprise:
- straight guide surfaces 23b, 23d, .., 23n (33b, 33d, ..) arranged on the side of conveying surfaces 19a, 19c.. 19n (19c, 19b, 19a) opposite to the immediately consecutive conveying surface 17c, 17f, .. (17c, 17b, ..); and
- curved guide surfaces 22b, 22d, .. 22n (34b, 34d, 34f), which are arranged on the side of respective conveying surfaces 19a, 19c, .. 19n (19c, 19b, 19a) and extend from relative guide surfaces 23b, 23d, .., 23n (33b, 33d, ..) towards respective immediately adjacent subsequent conveying surface 17a, 17c, .. 17n (17c, 17b, 17a).

Preferably, deviating means 20 also comprise, for each module 15a, 15c, .., 15n, a respective connecting element 24 to which deviators 21a, 21c, .., 21n are fixed, and for each module 15b, 15d, .. 15n a respective connecting element 24 to which deviators 31a, 31c, 31e are fixed.

Preferably, deviating means 20 also comprise, for each module 15a, 15c, .., 15n, a respective connecting element 25 to which deviators 21b, 21d, .., 21n are fixed, and for each module 15b, 15d, .. 15n a respective connecting element 25 to which deviators 31b, 31d, 31f are fixed.

In the embodiment shown, connecting elements 24, 25 are bars, which extend parallel to direction Y.

Furthermore, connecting elements 24, 25 are spaced along direction X.

In one embodiment, connecting elements 24, 25 are fixed parallel to direction X, so that portions Q and path P have a fixed length.

In another embodiment, the position of connecting elements 24, 25 parallel to direction X is adjustable, so that the length of portions Q and of path P have an adjustable length.

In greater detail, tunnel pasteurizing machine 1 comprises a control unit 30 (only schematically shown in Figure 1) receiving a signal associated to the desired temperature profile and is programmed to generate, on the basis of this signal, a control signal for displacing elements 24, 25 and, therefore, deviating means 20 in a corresponding position along direction X.

Furthermore, control unit 30 is programmed for selectively activating or de-activating spraying elements 14.

In case spraying elements 14 are deactivated, conveying group 10 define a storage surface for articles 2. The area of this storage surface can be selectively adjusted by suitably positioning deviating means 20 along direction X.

In use, articles 2 travel along path P from input station I to output station 0.

As they travel along path P, articles 2 travel along portions Q inside relative modules 15a, 15b, .., 15n of pasteurizing machine 1.

In greater detail, articles 2 move inside each module 15a from relative inlet to relative outlet and on consecutive conveying surfaces 17a, 19a, 17b, 19b, 17c, 19c, etc.. Furthermore, deviating means 20 deviate articles 2 from each conveying surface 17a, 19a, 17b, 19b, .. to corresponding immediate consecutive conveying surface 19a, 17b, 19b, 17c ..

The temperature of the edible product inside articles 2 varies along path P according to the temperature profile, as shown in Figure 6.

Control unit 30 adjusts the position of connecting elements 24, 25 and, therefore, of deviators 21a, 21b, .. 21n; 31a, 31b, .., 31n along direction X on the basis of the desired temperature profile of the edible product inside articles 2. In this way, the length of path P is adjusted to achieve the desired temperature profile.

If necessary, control unit 30 can also deactivate spraying elements 14, so as to define the storage surface for articles 2 inside tunnel pasteurizing machine 1.

Control unit 30 also defines the area of the storage surface by controlling the position of connecting elements 24, 25.

Still more precisely, articles 2 travel along direction X and in the first oriented direction along conveying surface 17a, are deviated by deviator 21a towards conveying surface 19a, travel along direction X and in the second oriented direction along conveying surface 19a, are deviated by deviator 21b towards conveying surface 17b, etc..

Afterwards, articles 2 move inside modules 15b, .., 15n from relative inlet to relative outlet.

In particular, as they move inside module 15b, 15d, etc, articles 2 move on consecutive conveying surfaces 17d, 19c, 17c, 19b, 19a, 17a. Furthermore deviating means 20 deviate articles 2 from each conveying surface 17d, 19c, 17c, 19b, 19a, 17a corresponding immediate consecutive conveying surface 19c, 17c, 19b, 17a.

As they move inside modules 15c, 15e, .., articles 2 move on consecutive conveying surfaces 17a, 19a, 17b, 19b, 17c, 19c, etc.. Furthermore, deviating means 20 deviate articles 2 from each conveying surface 17a, 19a, 17b, 19b, .. to corresponding immediate consecutive conveying surface 19a, 17b, 19b, 17c ..

As articles 2 advance along path P inside modules 15a, 15b, .. 15n, they pass through thermal zones 11, 12, 13. Spraying elements 14 spray the processing fluid onto articles 2, thus heating, pasteurizing and cooling the edible product inside articles 2.

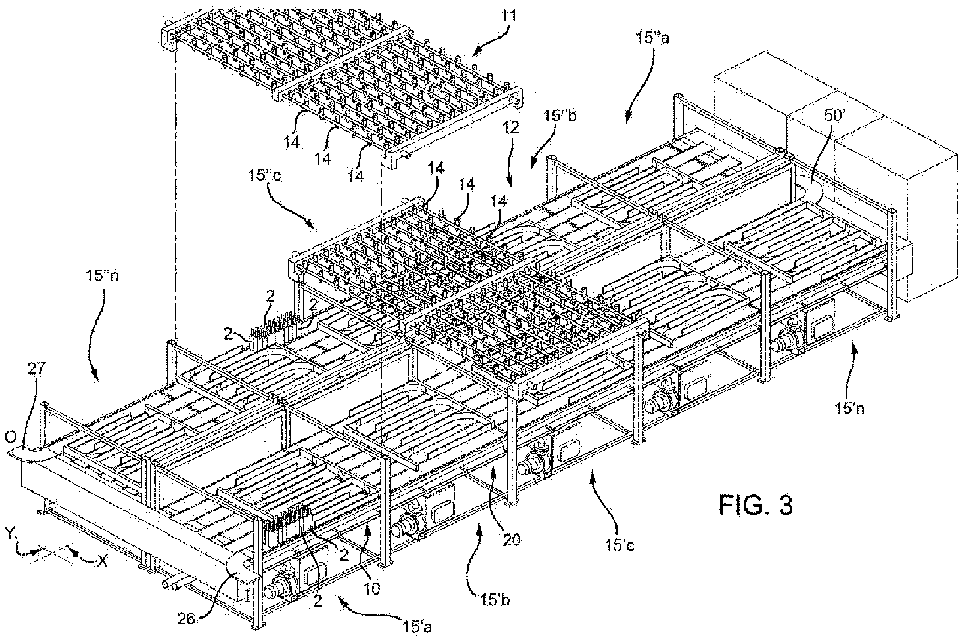

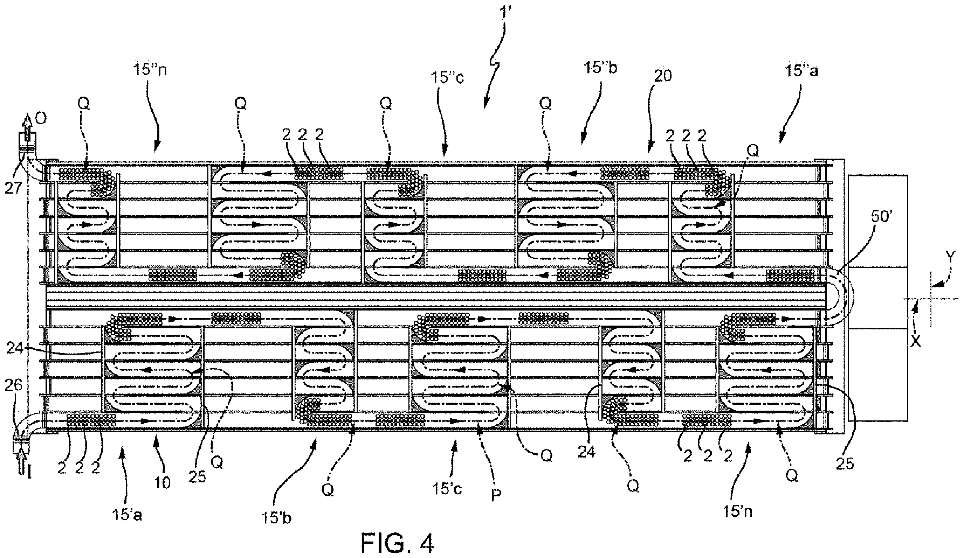

With reference to Figures 3 and 4, 1' indicates, as a whole, a tunnel pasteurizing machine according to a second embodiment of the present invention.

Pasteurizing machine 1' is similar to pasteurizing machine 1 and will be described hereinafter only as far as it differs therefrom; corresponding or equivalent parts of pasteurizing machine 1, 1' will be indicated where possible by the same reference numbers.

In particular, pasteurizing machine 1' differs from pasteurizing machine 1 in that inlet I and outlet 0 are arranged on the same side of it.

Furthermore, pasteurizing machine 1' comprises:
- a first group of modules 15'a, 15'b, .. 15'n aligned along direction X and in the first oriented direction, as to inlet I;
- a second group of modules 15" a, 15"b, .., 15" n aligned along direction X and in the second oriented direction, up to outlet 0; and
- a conveyor 50' which is interposed between the most downstram module 15'n of the first group and the most upstream module 15"a of the second group, proceeding according to the advancing direction of articles 2 along path P.

In the embodiment shown, conveyor 50' is U-shaped.

In particular, the first oriented direction is oriented from inlet I to conveyor 50' parallel to direction X.

The second oriented direction is oriented from conveyor 50' to outlet 0 parallel to direction X.

The operation of pasteurizing machine 1' is similar to the one of pasteurizing machine 1 and is therefore not described in detail.

The advantages of module 15a, 15b, .., 15n; 15a', 15'b, .., 15'n; 15'a, 15''b, .., 15" n and of the method according to the present invention will be clear from the foregoing description.

In particular, the length of path P is selectively adjustable independently of the length of pasteurizing machine 1, 1' along direction X.

It is therefore possible to adjust the temperature profile without acting on the speed of conveying group 10 and on the temperature of the fluid sprayed by spraying means 8.

In particular, modules 15a, 15b, .., 15n; 15a', 15'b, .., 15'n; 15'a, 15''b, .., 15" n comprise deviating means 20 for deviating articles 2 from conveying surface 17a, 17b, .., 17n (or 19'a, 19'b, .., 19n) to immediately consecutive conveying surface 19'a, 19'b .. (17'b, 17'c, .. 17n). In this way, the length of each portion Q of path P is made independent by the length of relative modules 15a, 15b, .., 15n; 15'a, 15'b, .., 15'n; 15"a, 15"b, .., 15"n along direction X.

Being each module 15a, 15b, .., 15n; 15'a, 15'b, .., 15'n; 15"a, 15''b, .., 15"n provided with relative deviating means 20, it is possible to adjust the time interval necessary to articles 2 to pass through a single sub-zone to time interval during which articles 2 pass through the remaining sub-zones.

Accordingly, it is possible to adjust the portion of the temperature profile associated to a single sub-zone without altering the remaining portions associated to corresponding remaining sub-zones.

In the light of the module, the resulting pasteurizing machine 1, 1' is particularly flexible in comparison with the known solution described in the introductory part of the present description.

Furthermore, the time interval during which articles 2 pass through pasteurizing machine 1, 1' can be easily adjusted by adjusting the position of deviating means 20 of module 15a, 15b, .., 15n; 15'a, 15'b, .., 15'n; 15''a, 15''b, .., 15"nalong direction X.

Accordingly, on one hand, it is possible to adjust the position of deviating means 20 on the basis of the desired temperature profile, thus rendering pasteurizing machine 1, 1' suitable to process different edible products requiring different temperature profiles.

On the other hand, it is possible to match the throughput of pasteurizing machine 1, 1' and filling unit 7/capping unit 8 and labelling unit 9. Accordingly, it is possible to advance a contained number of lines of articles 2 inside pasteurizing machine, thus avoiding any need for the inlet dividing station and the outlet dividing station. As a result, the final layout of pasteurizing machine 1, l'and bottling unit 4 is strongly simplified, with evident advantages in terms of costs and easier maintenance.

Furthermore, control unit 30 can adjust the position of deviating means 20 when spraying elements 14 are deactivated. In this way, conveying surfaces 17a, 17b, .. 17n; 19a, 19b, .., 19n define a storage having an adjustable area.

Finally, inlet I and outlet 0 are arranged at the same side of pasteurizing machine 1'.

Accordingly, in comparison with pasteurizing machine 1, 1', it is possible to concentrate the thermal zones 12, compact the final layout of the pasteurizing machine 1', and reduce the length of the equipment needed to recirculate back the processing fluid from the tank to spraying elements 14.

In this way, a substantial simplification of the resulting pasteurizing machine 1' is achieved.

Clearly, changes may be made to module 15a, 15b, .., 15n; 15a', 15b', .., 15n'; 15a", 15b", .., 15n" and to the method as described and illustrated herein without, however, departing from the scope of protection as defined in the accompanying claims.

In particular, module 15a, 15b, .., 15n; 15a', 15b', .., 15n'; 15a", 15b", .., 15n" could comprise only one conveying surface 17a, 17b, .., 17n, only one conveying surface 19a, 19b, .., 19n and only one deviator 21a, 21b, .., 21n.

Furthermore, the position of deviating means 20 could be adjusted on the basis of a quantity associated to the temperature profile of the edible product inside articles 2.

Conveying surface 17a, 17b, .., 17n; 19a, 19b, .., 19n could travel in the same oriented direction, even though with a different module.

Finally, pasteurizing machine 1, 1' could be a cooling or warming machine.

## Claims

1. A module (15a, 15b, .., 15n; 15a', 15b', .., 15n'; 15a", 15b", .., 15n") for a thermal treatment zone (11, 12, 13) of a thermal treatment machine (1, 1'), comprising:
- conveying means (10) for advancing along a thermal treatment path (P) a plurality of articles (2) to be treated; and
- thermal treatment means (14) selectively actuatable for carrying out a thermal treatment on said articles (2) advancing, in use, along said thermal treatment path (P);
**characterized in that** the length of said thermal treatment path (P) is selectively adjustable, so as to achieve a desired temperature profile of the edible product contained in said articles (2).

2. The module of claim 1, **characterized in that** said conveying means (10) comprise, in turn,:
- a first conveyor (16a, 16b, .., 16n) having a first conveying surface (17a, 17b, .., 17n) movable at a first speed; and
- a second conveyor (18a, 18b, .. 18n) having a second conveying surface (19a, 19b, .. 19n) movable at a second speed different from said first speed;
said second conveying surface (19a, 19b, .., 19n) being immediately consecutive to said first conveying surface (17a, 17b, .., 17n), proceeding along said thermal treatment path (P) according to the advancing trajectory of said articles (2);
said module (15a, 15b, .., 15n; 15a', 15b', .., 15n'; 15a", 15b", .., 15n") further comprising deviating means (20) configured to interact, in use, with said articles (2) travelling along said first conveying surface (17a, 17b, .., 17n) and for deviating said articles (2) from said first conveying surface (17a, 17b, .., 17n) towards said second conveying surface (19a, 19b, .., 19n);
the position of said deviating means (20) with respect to said first and/or second conveying surface (17a, 17b, .., 17n; 19a, 19b, .., 19n) being adjustable, so as to adjust a length of said thermal treatment path (P).

3. The module of claim 2, **characterized in that** said first conveyor (16a, 16b, .., 16n) is movable along a first direction (X) and in a first oriented direction, and **in that** said second conveyor (18a, 18b, .. 18n) is movable along said first direction (X) and in second oriented direction, opposite to the first oriented direction.

4. The module of claim 2 or 3, **characterized in that** said deviating means (20) comprise at least one deviator (21a, 21b, .. 21n; 31a, 31b, .., 31n) arranged at least in part along one of said first conveying surface (17a, 17b, .., 17n) and said second conveying surface (19a, 19b, .., 19n), and extending at least in part transversally to said one of first conveying surface (17a, 17b, .., 17n) and second conveying surface (19a, 19b, .., 19n).

5. The module of claim 4, **characterized by** comprising a control unit (30) which is programmed to adjust said position of said deviating means (20), on the basis of a quantity associated to said desired temperature profile of the edible product contained in said articles (2).

6. The module of claim 5, **characterized in that** said control unit (30) is programmed to selectively activate/deactivate said thermal treatment means (14), so as to form a given volume of storage inside said module (15a, 15b, .., 15n; 15a', 15b', .., 15n'; 15a", 15b", .., 15n") .

7. The module of any one of the foregoing claims, **characterized in that** said conveying means (10) comprise a plurality of said first conveyors (16a, 16b, .., 16n) and second conveyors (18a, 18b, .., 18n) alternate to one another along a second direction (Y) transversal to said first direction (X).

8. The module of claim 7, **characterized in that** said deviating means (20) comprises a plurality of deviators (21a, 21b, .. 21n; 31a, 31b, .., 31n) arranged, each, in part along said first conveying surface (17a, 17b, .., 17n) and extending transversally to said first and second conveying surfaces (17a, 17b, .., 17n; 19a, 19b, .., 19n).

9. The module of any one of the foregoing claims, **characterized in that** said thermal treatment means (14) are cooling means or warming means.

10. A thermal treatment machine (1, 1') comprising:
- an inlet (I) for said articles (0) to be treated;
- a plurality of thermal treatment modules (15a, 15b, .., 15n; 15a', 15b', .., 15n'; 15a", 15b", .., 15n") according to any one of the foregoing claims and arranged downstream of said inlet (I) proceeding along said path (P) according to the advancing direction of said articles (2); and
- an outlet (0) for outputting said treated articles and arranged downstream of said modules ((15a, 15b, .., 15n; 15a', 15b', .., 15n'; 15a", 15b", .., 15n"), proceeding along said path (P) according to the advancing direction of said articles (2).

11. The thermal treatment machine of claim 10, **characterized in that** said inlet and outlet (I, 0) are arranged at the same side of said thermal treatment machine (1, 1').

12. The thermal treatment machine of claim 10, **characterized in that** said inlet and said outlet (I, 0) are arranged at respective opposite sides of said thermal treatment machine (1, 1').

13. The thermal treatment machine of any one of claims 10 to 12, **characterized by** comprising a single first conveyor (16a, 16b, .., 16n) and a single said conveyor (18a, 18b, 18n) common to all said thermal treatment modules (15a, 15b, .., 15n; 15a', 15b', .., 15n'; 15a", 15b", .., 15n").

14. A method for carrying out a thermal treatment on a plurality of articles (2), comprising the steps of:
i) conveying a plurality of articles (2) to be treated along a thermal treatment path (P);
ii) selectively carrying out a thermal treatment on said articles (2) travelling on said thermal treatment path (P) ;
**characterized in that** said step i) comprises the steps of:
iii) adjusting the length of said thermal treatment path (P) on the basis of a desired value of said length, so as to achieve a desired temperature profile of the edible product contained in said articles (2) during said step ii) .

15. The method of claim 14, **characterized by** comprising the steps of:
iv) conveying said articles (2) at a first speed on a first surface (17a, 17b,.., 17n); and
v) conveying said articles (2) at a second speed different from said first speed on a second conveying surface (19a, 19b, .., 19n); said second conveying surface (19a, 19b, .., 19n) being immediately consecutive to said first conveying surface (17a, 17b,.., 17n), proceeding along said thermal treatment path (P) according to the advancing trajectory of said articles (2);
said method further comprising a step vi) of deviating said articles (2) from said first surface (17a, 17b,.., 17n), towards said immediately adjacent second surface (19a, 19b, .., 19n).

16. The method of claim 15, **characterized in that** said step vi) is carried out by means of deviating means (20) ;
said method further comprising a step vi) of adjusting the position of said deviating means (20) on the basis said desired temperature profile of the edible product inside said articles (2) to be achieved during said step ii).

17. The method of claim 15 or 16, **characterized by** comprising the steps of:
vii) of moving said first surface (17a, 17b, .. 17n) along a first direction (X) and in a first oriented direction; and
viii) moving said second surface (19a, 19b, .. 19n) is along said first direction (X) and in a second oriented direction, opposite to the first oriented direction.
